# DEMANDE DE BREVET EUROPEEN

(11) **EP 1 076 291 A1**
(43) Date de publication de la demande: **14.02.2001**
(21) Numéro de dépôt: 99460052.6
(22) Date de dépôt: 13.08.1999
(51) Int. Cl.: G06F 11/00

(54) **Procédé de test d'un équipment à noyau temps reel.**

(71) Demandeur: TRT Lucent Technologies (SA), 75008 Paris (FR)
(72) Inventeur: Gourand, Joel, 76130 Mont-Saint-Aignan (FR)
(74) Mandataire: Ballot, Paul

(57) **Abrégé**

La présente invention concerne un procédé de test d'un programme applicatif d'un équipement à noyau temps réel dans lequel les tâches communiquent entre elles par des messages. L'invention concerne tout particulièrement bien que non exclusivement le test d'équipements de télécommunication. Selon l'invention, on simule une tâche dans une unité extérieure. Le message de sortie de cette tâche est acheminée dans l'équipement de sorte à lancer l'exécution de tâches à tester. Le message de sortie de la dernière tâche de la séquence à tester est acheminée vers l'unité extérieure puis analysé.

## Description

La présente invention concerne un procédé de test d'un programme applicatif d'un équipement à noyau temps réel dans lequel les tâches communiquent entre elles par des messages. L'invention concerne tout particulièrement bien que non exclusivement le test d'équipements de télécommunication.

Actuellement, les équipements de télécommunications comportent classiquement un noyau temps réel (communément appelé kernel par les spécialistes du domaine) chargé de gérer les ressources de l'équipement et de créer un environnement dans lequel est exécuté le programme applicatif de l'équipement. Ce noyau comporte généralement plusieurs modules offrant des services bien déterminés. Par exemple, il comprend un module pour gérer les tâches ou processus au sein de l'équipement, un autre pour gérer la mémoire centrale, un autre pour gérer les entrées/sorties, un autre pour gérer les fichiers, etc... Au sein de ces équipements, les tâches peuvent communiquer entre elles soit en utilisant des variables partagées, soit en échangeant des messages. L'invention porte uniquement sur les systèmes communiquant par messages.

Au moment de leur mise en service ou lors d'une opération de maintenance, ces équipements sont testés pour s'assurer que leur programme applicatif fonctionne comme prévu. Pour ce faire, un programme de test stocké dans l'équipement est lancé. L'équipement passe alors en mode test. Lors de cette phase de test, ce programme se substitue au programme applicatif dans le noyau de l'équipement. Ce programme est alors chargé d'activer des séquences de tâches à tester et d'analyser les messages échangés entre ces tâches.

Un tel procédé de test présente cependant quelques inconvénients :
- le scénario de test (la séquence de tâches à activer) ne peut être modifié dynamiquement ; ce scénario est en effet défini une fois pour toutes dans le programme de test ; pour en changer, il faut réécrire le programme, le recompiler et le recharger dans l'équipement ;
- le programme de test occupe un espace mémoire relativement important dans l'équipement.

L'invention a pour but de pallier ces inconvénients en proposant un procédé de test permettant de tester dynamiquement ledit équipement et ne nécessitant que peu de mémoire au niveau de l'équipement. Selon l'invention, le scénario de test est défini dans un programme de test installé dans une unité extérieure à l'équipement de télécommunication. Ce programme de test est chargé d'activer des tâches à l'intérieur de l'équipement, de rediriger le ou les messages de sortie de ces tâches vers l'unité extérieure et d'analyser ces messages.

Aussi, l'invention a pour objet un procédé de test d'un équipement à noyau temps réel dans lequel sont exécutées une pluralité de tâches, lesdites tâches communiquant entre elles par l'intermédiaire de messages, chaque tâche étant activée par un message d'entrée et délivrant un message de sortie, lequel procédé est destiné à tester une séquence de tâches et est caractérisé en ce qu'il comporte les étapes suivantes :
(a) simuler une tâche dans une unité extérieure au dit équipement, laquelle tâche délivre un message de sortie destiné à activer la première tâche de ladite séquence à tester,
(b) acheminer ledit message de sortie vers ledit équipement,
(c) exécuter dans ledit équipement lesdites tâches de la séquence à tester,
(d) acheminer le message de sortie de la dernière tâche de la séquence à tester vers l'unité extérieure, et
(e) analyser, dans ladite unité extérieure, ledit message de sortie.

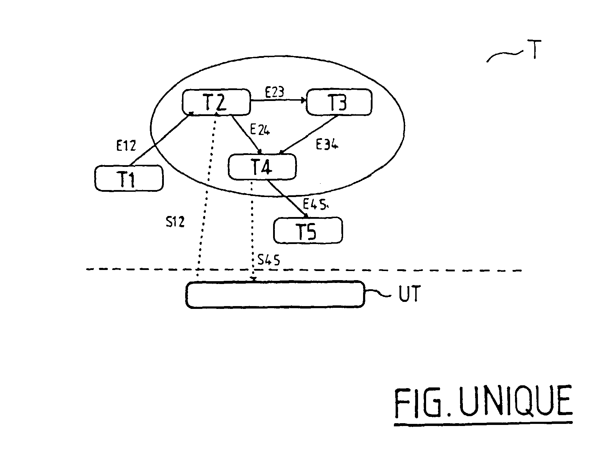

D'autres caractéristiques et avantages de l'invention apparaîtront à la lecture de description détaillée qui suit et qui est faite en référence à la figure unique qui présente le déroulement d'une séquence de test selon l'invention.

Sur la figure unique est représenté un équipement de télécommunications T dans lequel sont exécutées des tâches T1, T2, T3, T4 et T5. Ces tâches sont gérées par un noyau temps réel (non représenté) prévu dans l'équipement. Ces tâches communiquent à travers des messages ou événements Eij, où i et j représentent respectivement le numéro de la tâche source et le numéro de la tâche destination de ce message. E12 désigne par exemple le message en provenance de la tâche T1 et à destination de la tâche T2.

Dans l'exemple de la figure unique, les tâches T1 à T5 sont exécutées de la façon suivante en mode normal : la tâche T1 est exécutée et envoie un message de sortie E12 à destination de la tâche T2. La tâche T2 est alors exécutée et délivre à son tour des messages E23 et E24 à destination, respectivement, des tâches T3 et T4. La tâche T3 est ensuite exécutée et délivre un message E34 à destination de la tâche T4. Enfin, la tâche T4 est exécutée et envoie des messages E45 à destination de la tâche T5.

Selon l'invention, l'équipement T est connecté à une unité extérieure de test UT par l'intermédiaire d'une liaison, de type série par exemple. Le noyau temps réel de l'équipement est conçu pour communiquer avec cette unité extérieure et pour acheminer des messages issus de l'unité extérieure vers la tâche concernée dans l'équipement.

Un programme de test est prévu dans l'unité de test. Ce programme est tout d'abord chargé de simuler une tâche de l'équipement afin de produire le message adéquat pour activer une séquence de tâches à tester dans l'équipement. Ce message est alors envoyé vers le noyau temps réel de l'équipement, lequel noyau achemine ce message vers la première tâche de la séquence de tâches à tester. La séquence de tâches à tester est alors exécutée. Puis, le noyau temps réel achemine le message issu de la dernière tâche de la séquence vers l'unité extérieure et le programme de test analyse ce message. Les messages en provenance ou à destination de l'unité extérieure sont notés Sij, où i et j représentent respectivement le numéro de la tâche source et le numéro de la tâche destination de ce message.

Dans l'exemple donné à la figure unique, la séquence de tâches qui est testée est composée des tâches T2, T3 et T4. Pour tester cette séquence, la tâche T1 est tout d'abord simulée dans l'unité extérieure UT et son message de sortie S12 est transmis à l'équipement T. Ce message est acheminé vers la tâche T2 de l'équipement. Les tâches T2, T3 et T4 sont alors exécutées normalement dans l'équipement. En fin de séquence, le message en provenance de la tâche T4 et à destination de la tâche T5 est redirigé vers l'unité extérieure de manière à être analysé par le programme de test contenu dans cette dernière. Ce message est noté S45 sur la figure. Dans ce procédé, le test de la séquence de tâches T2, T3 et T4 revient à analyser le message S45 issu de la tâche T4. Si une anomalie est détectée, il conviendra certainement d'affiner la séquence de T2, T3 ou la séquence T3, T4.

S'il y a plusieurs séquences de tâches à tester, on applique l'ensemble des étapes décrites à chacune de ces séquences. On peut toutefois prévoir dans ce cas-là de n'analyser les messages de sortie Si,j provenant des séquences à tester que lorsque la totalité des messages Si,j a été acheminée vers l'unité extérieure.

Dans ce procédé, le scénario de test peut être modifié très facilement dans le programme de test puisque ce dernier est installé sur une unité extérieure de type PC. Par ailleurs, dans le cas présent, la taille du programme n'est pas limitée par la capacité mémoire de l'équipement.

## Revendications

1. Procédé de test d'un équipement à noyau temps réel dans lequel sont exécutées une pluralité de tâches, lesdites tâches communiquant entre elles par l'intermédiaire de messages, chaque tâche étant activée par un message d'entrée et délivrant un message de sortie, lequel procédé est destiné à tester au moins une séquence de tâches et est caractérisé en ce qu'il comporte les étapes suivantes :
(a) simuler une tâche dans une unité extérieure au dit équipement, laquelle tâche délivre un message de sortie destiné à activer la première tâche de ladite au moins une séquence à tester,
(b) acheminer ledit message de sortie vers ledit équipement,
(c) exécuter dans ledit équipement lesdites tâches de ladite au moins une séquence à tester,
(d) acheminer le message de sortie de la dernière tâche de ladite au moins une séquence à tester vers l'unité extérieure, et
(e) analyser, dans ladite unité extérieure, ledit message de sortie.

2. Procédé selon la revendication 1, caractérisé en ce que l'unité extérieure est un ordinateur de type PC qui est connecté audit équipement par l'intermédiaire d'une liaison série.

3. Procédé selon la revendication 1 ou 2, caractérisé en ce que les étapes (a) et (e) sont effectuées par un programme de test contenu dans ladite unité extérieure (UT) et en ce que les étapes (b) à (d) sont gérées par le noyau temps réel dudit équipement.
